# FASCICULE DE BREVET EUROPEEN

(11) **EP 1 724 141 B1**
(45) Date de publication et mention de la délivrance du brevet: **16.07.2008**
(21) Numéro de dépôt: 06300419.6
(22) Date de dépôt: 02.05.2006
(51) Int. Cl.: B60J 10/00

(54) **Dispositif d'étanchéité entre un pare-brise et une grille d'auvent d'un véhicule automobile et véhicule automobile comportant un tel dispositif d'étanchéité.**
Abdichtanordnung zwischen einer Windschutzscheibe und Wasserkasten eines Fahrzeuges und Fahrzeug mit einer solchen Abdichtanordnung
Sealing device between windscreen and cowl of a vehicle and a vehicle with such a sealing device

(30) Priorité: 19.05.2005 FR 0505043
(43) Date de publication de la demande: 22.11.2006
(73) Titulaire: PEUGEOT CITROËN AUTOMOBILES S.A., 78140 Velizy Villacoublay (FR)
(72) Inventeur: Leon, Franck, 92500, Rueil Malmaison (FR)

(56) Documents cités:
- DE-A1- 3 824 793
- DE-U1- 9 113 392
- FR-A- 2 710 009
- FR-A- 2 754 503
- FR-A- 2 817 302
- US-A- 4 007 536
- US-A- 4 146 263
- US-B1- 6 487 819

## Description

La présente invention concerne un dispositif d'étanchéité entre un pare-brise et une grille d'auvent d'un véhicule automobile.

L'invention concerne également un véhicule automobile équipé d'un tel dispositif d'étanchéité entre le pare-brise et la grille d'auvent.

Les véhicules automobiles comportent, au dessous du pare-brise, une grille d'auvent dont le rôle est de capter l'air qui alimente le système de climatisation du véhicule.

Cette grille d'auvent est généralement placée entre la partie inférieure du pare-brise et le capot moteur du véhicule automobile. La partie inférieure de ce pare-brise est fixée au moyen d'un cordon de colle, sur une traverse inférieure de baie qui s'étend sur toute la largeur du véhicule.

L'étanchéité entre la grille d'auvent et le bord inférieur du pare-brise est comme par exemple dans le document FR A 2 668 110, assurée par une mâchoire de coincement portée par la grille d'auvent et dont les branches reposent sur le bord inférieur du pare-brise et sur le bord avant de la traverse à proximité de la surface de collage du pare-brise. La branche située sur la face supérieure de ce pare-brise se termine par une lèvre d'étanchéité en appui sur cette face.

Il est également connu du document DE 91 13 392 U de disposer entre la grille d'auvent et la traverse inférieure de pare-brise un dispositif d'étanchéité. Ce dispositif d'étanchéité est disposé sur un rebord formant gouttière de la traverse inférieure de pare-brise.

Les principaux inconvénients des dispositifs d'étanchéité utilisés jusqu'à présent résident dans le fait qu'ils ne présentent pas toujours toutes les garanties d'étanchéité en particulier lorsque les bras essuie-vitres renvoient le flux d'eau sur la grille d'auvent et ils ne permettent pas d'absorber les tolérances de montage de la grille d'auvent par rapport à la caisse du véhicule automobile.

L'invention a donc pour objet un dispositif d'étanchéité entre un pare-brise et une grille d'auvent d'un véhicule automobile, du type comportant une traverse inférieure de baie fixée rigidement à des éléments de carrosserie et supportant le bord inférieur du pare-brise et la grille d'auvent, la traverse inférieure de baie comportant un rebord inférieur formant une gouttière, caractérisé en ce qu'il comprend un joint d'étanchéité tubulaire interposé entre la grille d'auvent et la traverse inférieure de baie et disposé entre le rebord inférieur et l'extrémité inférieure du pare-brise.

Selon d'autres caractéristiques de l'invention :
- le joint d'étanchéité tubulaire est porté par la grille d'auvent,
- le joint d'étanchéité tubulaire est en caoutchouc,
- la grille d'auvent comporte un rebord d'accrochage destiné à venir se placer dans un logement aménagé dans un joint d'étanchéité monté sur le bord inférieur du pare-brise et appliqué sur la traverse inférieure de baie, et

L'invention a également pour objet un véhicule automobile, caractérisé en ce qu'il comporte un dispositif d'étanchéité entre le pare-brise et la grille d'auvent tel que précédemment mentionné.

D'autres caractéristiques et avantages de l'invention apparaîtront au cours de la description qui va suivre, donnée à titre d'exemple et faite en référence aux dessins annexés, sur lesquels :

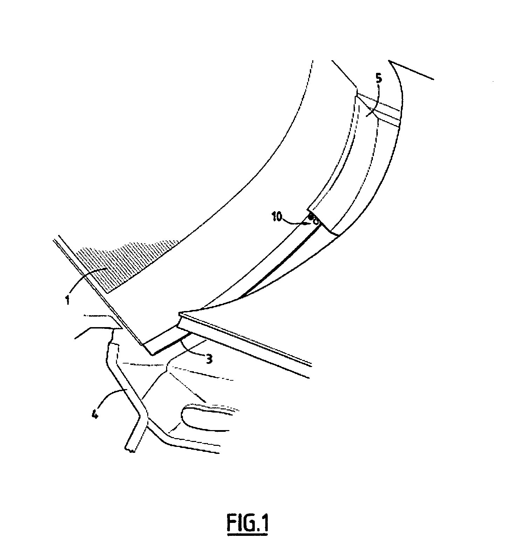

- la figure 1 est une vue schématique en perspective et partiellement arrachée d'un dispositif conforme à l'invention, destiné à assurer l'étanchéité entre un pare-brise et une grille d'auvent d'un véhicule automobile, et
- la figure 2 est une vue schématique en coupe transversale du dispositif d'étanchéité, conforme à l'invention.

Sur les figures, on a représenté schématiquement la partie inférieure d'un pare-brise 1 qui est fixée au moyen d'un cordon de colle 2 sur une traverse inférieure de baie 3. Cette traverse inférieure de baie 3 s'étend sur toute la largeur du véhicule automobile et est fixée rigidement à des éléments de carrosserie 4.

La traverse inférieure de baie 3 supporte également une grille d'auvent 5 qui prolonge la partie inférieure du pare-brise 1 et qui a pour rôle de capter l'air pour alimenter le système de climatisation du véhicule automobile.

L'étanchéité entre le pare-brise 1 et la grille d'auvent 5 est assurée par un dispositif formé par un joint d'étanchéité tubulaire 10 interposé entre la grille d'auvent 5 et la traverse inférieure de baie 3. De préférence, le joint d'étanchéité tubulaire 10 est porté par la grille d'auvent 5 et est réalisé en caoutchouc.

La grille d'auvent 5 est également pourvue, d'une part, d'un joint à lèvre 6 destiné à venir s'appliquer sur la partie inférieure du pare-brise 1 et, d'autre part, d'un rebord d'accrochage 7 destiné à venir se placer dans un logement 11 ménagé dans un joint d'étanchéité 12 monté sur le bord inférieur du pare-brise 1 et appliqué sur la traverse inférieure de baie 3.

Cette traverse inférieure de baie 3 comporte un rebord inférieur 3a recourbé vers le haut et formant une gouttière.

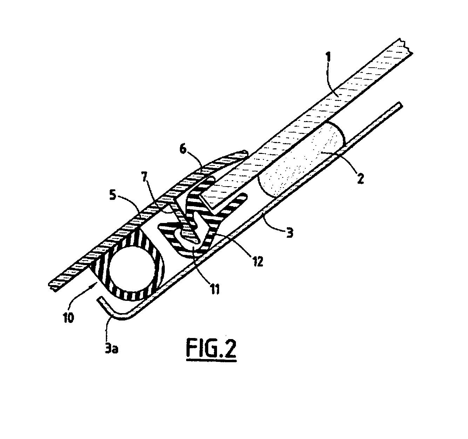

Le joint d'étanchéité tubulaire 10 est disposé à proximité du rebord inférieur 30 formant la gouttière de la traverse inférieure de baie 3, comme montré à la Fig. 2.

Lors du montage de la grille d'auvent 5, le joint d'étanchéité tubulaire 10 s'écrase sur la traverse inférieure de baie 3 et crée une barrière à l'eau lorsqu'il est sous contrainte. Ce joint 10 permet donc d'assurer une étanchéité totale entre le pare-brise 1, la traverse inférieure de baie 3 et la grille d'auvent 5 en particulier lorsque les bras d'essuie-vitres du véhicule automobile renvoient le flux d'eau sur la grille d'auvent 5.

La gouttière formée par le rebord inférieur 3a de la traverse inférieure de baie 3 permet de récupérer un résiduel d'eau dans le cas où la grille d'auvent 5 n'est pas montée correctement.

Le dispositif d'étanchéité selon l'invention est donc simple à mettre en oeuvre et facilite le montage de la grille d'auvent 5, tout en permettant d'absorber les tolérances de montage des éléments de la carrosserie du véhicule automobile.

Enfin, le dispositif selon l'invention améliore l'étanchéité entre le pare-brise et la grille d'auvent et est compatible avec tous les types de pare-brise.

## Revendications

1. Dispositif d'étanchéité entre un pare-brise (1) et une grille d'auvent (5) d'un véhicule automobile, du type comportant une traverse inférieure de baie (3) fixée rigidement à des éléments de carrosserie et supportant le bord inférieur du pare-brise (1) et la grille d'auvent (5), ladite traverse inférieure de baie (3) comportant un rebord inférieur (3a) formant une gouttière, **caractérisé en ce qu'**il comprend un joint d'étanchéité tubulaire (10) interposé entre la grille d'auvent (5) et la traverse inférieure de baie (3) et disposé entre le rebord inférieur (3a) et l'extrémité inférieure du pare-brise (1).

2. Dispositif selon la revendication 1, **caractérisé en ce que** le joint d'étanchéité tubulaire (10) est porté par la grille d'auvent (5).

3. Dispositif selon la revendication 1 ou 2, **caractérisé en ce que** le joint d'étanchéité tubulaire (10) est en caoutchouc.

4. Dispositif selon l'une quelconque des revendications 1 à 3, **caractérisé en ce que** la grille d'auvent (5) comporte un rebord d'accrochage (7) destiné à venir se placer dans un logement (11) ménagé dans un joint d'étanchéité (12) monté sur le bord inférieur du pare-brise (1) et appliqué sur la traverse inférieure de baie (3).

5. Véhicule automobile, **caractérisé en ce qu'**il comporte un dispositif d'étanchéité entre le pare-brise (1) et la grille d'auvent (5) selon l'une quelconque des revendications 1 à 5.

## Claims

1. Device for forming a seal between a windscreen (1) and a cowl grille (5) of a motor vehicle, of the type having a lower window cross member (3) fixed rigidly to bodywork elements and supporting the lower edge of the windscreen (1) and the cowl grille (5), the said lower window cross member (3) having a lower lip (3a) forming a gutter, **characterized in that** the sealing device comprises a tubular seal (10) inserted between the cowl grille (5) and the lower window cross member (3) and provided between the lower rim (3a) and the lower edge of the windscreen (1).

2. Device according to Claim 1, **characterized in that** the tubular seal (10) is borne by the cowl grille (5).

3. Device according to Claim 1 or 2, **characterized in that** the tubular seal (10) is made of rubber.

4. Device according to any one of Claims 1 to 3, **characterized in that** the cowl grille (5) has a coupling lip (7) intended to be placed in a housing (11) formed in a seal (12) mounted on the lower edge of the windscreen (1) and applied to the lower window cross member (3).

5. Motor vehicle, **characterized in that** it has a sealing device between the windscreen (1) and the cowl grille (5) according to any one of Claims 1 to 5.

## Patentansprüche

1. Abdichtanordnung zwischen einer Windschutzscheibe (1) und einem Windlaufgrill (5) eines Kraftfahrzeugs des Typs, die einen unteren Öffnungsquerbalken (3) aufweist, der starr an Karosserieelementen befestigt ist und den unteren Rand der Windschutzscheibe (1) und den Windlaufgrill (5) trägt, wobei der untere Öffnungsquerbalken (3) eine untere Krempe (3a), die eine Ablaufrinne bildet, aufweist, **dadurch gekennzeichnet, dass** sie eine röhrenförmige Dichtung (10) aufweist, die zwischen dem Windlaufgrill (5) und dem unteren Öffnungsquerbalken (3) eingefügt ist und zwischen der unteren Krempe (3a) und dem unteren Ende der Windschutzscheibe (1) angeordnet ist.

2. Anordnung nach Anspruch 1, **dadurch gekennzeichnet, dass** die röhrenförmige Dichtung (10) von dem Windlaufgrill (5) getragen wird.

3. Anordnung nach Anspruch 1 oder 2, **dadurch gekennzeichnet, dass** die röhrenförmige Dichtung (10) aus Kautschuk besteht.

4. Anordnung nach einem der Ansprüche 1 bis 3, **dadurch gekennzeichnet, dass** der Windlaufgrill (5) eine Anhängkrempe (7) aufweist, die dazu bestimmt ist, sich in eine Aufnahme (11) zu fügen, die in einer Dichtung (12) eingerichtet ist, die auf den unteren Rand der Windschutzscheibe (1) montiert ist und auf dem unteren Öffnungsquerbalken (3) aufliegt.

5. Kraftfahrzeug, **dadurch gekennzeichnet, dass** es eine Abdichtanordnung zwischen der Windschutzscheibe (1) und dem Windlaufgrill (5) nach einem der Ansprüche 1 bis 5 aufweist.
